# EUROPEAN PATENT SPECIFICATION

(11) **EP 2 718 078 B1**
(45) Date of publication and mention of the grant of the patent: **17.11.2021**
(21) Application number: 11867180.9
(22) Date of filing: 06.06.2011
(51) Int. Cl.: B29C 33/38, B29C 33/40, B29C 35/08, B29C 39/26, C08J 3/24, C08J 3/28, H01B 3/46, B29K 83/00, C08G 77/12, C08G 77/20, C08L 83/04, H01B 3/28

(54) **METHOD OF PRODUCING SHAPED ARTICLES FROM A UV-CURABLE SILICONE RUBBER COMPOSITION**
VERFAHREN ZUR HERSTELLUNG GEFORMTER GEGENSTÄNDE AUS EINER UV-HÄRTBAREN SILIKONKAUTSCHUKZUSAMMENSETZUNG
PROCÉDÉ DE FABRICATION D'ARTICLES FAÇONNÉS À PARTIR D'UNE COMPOSITION DE CAOUTCHOUC DE SILICONE DURCISSABLE PAR UV

(43) Date of publication of application: 16.04.2014
(73) Proprietor: ABB Power Grids Switzerland AG, 5400 Baden (CH)
(72) Inventor: DRUGGE, Birger, 72216 Vasteras (SE); RAPP, Hans, 44143 Alingsås (SE); PALMQVIST, Lars, 44130 Alingsås (SE); SCHNEIDER, Marco, CH-4663 Aarburg (CH); MEIER, Patrick, CH-4663 Aarburg (CH); FENNESSEY, Sian Frances, CH-8409 Winterthur (CH); KORNMANN, Xavier, 79787 Lauchringen (DE)
(74) Representative: Michalski Hüttermann & Partner Patentanwälte mbB
(86) International application number: PCT/US2011/039339
(87) International publication number: WO 2012/170008

(56) References cited:
- US-A- 5 332 536
- US-A1- 2003 122 269
- US-A1- 2008 033 071
- US-A1- 2008 033 071
- US-A1- 2008 290 534
- US-B2- 7 125 236
- US-B2- 7 923 272
- None

## Description

### Field

The present writing relates to a method according to claim 1 of producing shaped articles from a ultra-violet light (UV) curable silicone rubber composition by using a thermoformed UV-transparent mould and curing said UV-curable silicone rubber composition within the thermoformed UV-transparent mould with a UV-light source. Said shaped articles preferably are electrical insulators for indoor and outdoor use, preferably high voltage electrical insulators. Said thermoformed UV-transparent mould is made from a thermoplastic UV-transparent polymer, and preferably is made from a thermoplastic UV-transparent and UV-stable polymer. Said UV-light source preferably is a UV-LED light source. The present writing relates also to the use of a thermoformed UV-transparent mould according to claim 11.

### State of the Art

In the electrotechnical industry silicone compositions are used as electrical insulations both for indoor and outdoor applications, for example as hollow core insulators, cable accessories such as cable terminations, medium voltage and high voltage surge arresters, or vacuum interrupters. For these applications high temperature vulcanizing silicone rubber (HTV-SR) compositions and room temperature vulcanizing silicone rubber (RTV-SR) compositions, including liquid silicone rubber (LSR) compositions, are used. In the case of RTV-SR and LSR compositions, the curable silicone rubber composition is generally composed of two components, namely a first component comprising at least one polysiloxane having alkenyl groups, such as vinyl groups, incorporated in the molecule, and a second component comprising at least one polysiloxane having ≡SiH-groups incorporated in the molecule. These two components are mixed, filled into a mould and cured in the presence of a catalyst, e.g. a UV sensitive cross-linking catalyst. Such UV-curable silicone rubber compositions being curable in the presence of UV-radiation are known in the art and are described for example in WO 2006/010763 A1 and WO 2009/027133 A2.

UV-curable silicone rubber compositions cure very fast under the influence of UV-light even for large thicknesses of several centimeters. This is of importance as the curing time plays a significant role in the production and cycle time of such products.

Quartz moulds have been developed to manufacture insulators made from UV-curable silicone rubber compositions as described for example in WO2007065766 A1. Quartz has the advantage of being transparent for UV-radiation, i.e. is UV-transparent, as well as being stable to UV-radiation, i.e. is UV-stable. However, quartz has the disadvantage of being brittle. Quartz moulds further are difficult to produce on an industrial scale and their production is comparatively cost intensive when compared to the production of steel moulds. Therefore, there is a need for simple and comparatively cheap moulds for the use in the production of shaped articles such as electrical insulators which are made from UV-curable silicone rubber compositions. US 2008/0033071 A1 relates to the use of light-activatable, curable or crosslinkable silicone compositions for the production of thick-walled moulding products or of thick-walled coatings.

### Summary

It has now been found that it is possible to produce UV-cured shaped articles from UV-curable silicone rubber compositions by using moulds which are made substantially entirely from thermoplastic UV-transparent polymeric materials. These moulds or at least parts or portions thereof are manufactured of sheet material, also known as semi-finished, planar sheet products having a constant thickness, in particular standard sheet
material that is commercially available and inexpensive. That sheet material is being brought in such a shape, e.g. by thermoforming, such that its interior contour is the negative or the positive of the form of the article to be shaped with the moulds. Depending on the complexity and the cross-section of the article to be shaped by the molds, a single mold, two halve-moulds that are matching one another or multi-part moulds comprising several mold portions may be required.

The present invention refers to a thermoformed UV-transparent mould which is entirely made from a thermoplastic UV- transparent polymer. The wall thickness of such moulds can vary between about 1 mm to 50 mm, depending on the size of the article to be shaped and the amount of the UV curable composition, e.g. a UV curable silicone rubber composition, that needs to be supported and prevented from deforming the moulds or mould portions for the article to be shaped by the moulds. Expressed differently, moulds having a wall thickness of more than 1 mm can carry havier weight fillings of the UV curable composition than moulds having a wall thickness of 1 mm only.

Using thermoformed thermoplastic UV-transparent moulds according to the present invention allows using moulds which are easy and comparatively cheap to produce with conventional methods, especially with thermoforming techniques, also on an industrial scale. This renders the production of UV-cured shaped articles made from UV-curable silicone rubber compositions considerably cheaper and further very flexible with respect to technical feasibility. For example, when a mould is damaged due to handling or ageing, it can easily be replaced. Moreover, the method according to the present invention allows the manufacture of large moulds which are not possible to manufacture by other means, such as by machining or injection moulding techniques. This is of particular interest for the manufacture of large articles, such as electrical insulators like hollow core insulators.

A further advantage resides in that also large moulds of several meters length can be manufactured from thermoformed sheet material since standard PMMA sheets of 2 by 3 meters, for example, are available and are thermoformable on suitable forming machinery.

A further advantage of the moulds that are made of solid sheet material resides in a comparatively low mass or weight compared to moulds that are made of a cylindric, for example prismatic transparent blocks that are machined thereafter for creating the negative form of the article to be shaped. Nonetheless are the inventive molds rigid enough to be re-used in a subsequent moulding process of a new shaped article after demoulding a previous shaped article moulded therein.

A further advantage is the use of the thermoformed thermoplastic mould of the present invention in the manufacture of UV-cured shaped articles made from UV-curable silicone rubber compositions in combination with UV-LED lamps. Due to the low heat emission of UV-LED lamps, the lamps can be placed very close to the wall of the thermoformed mould without damaging the plastic mould. This enhances the curing of the UV-curable silicone rubber composition.

The mould concept of the present invention may be combined with UV-reflecting materials like aluminum foils or polished aluminum parts in order to optimize the UV-exposure of the part to be moulded.

### Drawings

The present technology will be better understood but not limited by the attached drawings where:
Figure 1 pictorally shows a first step and a second step of attending to a mould.
Figure 2 illustrates a thermoplastic mould within a frame and around an insert.

### Description

The present invention is defined in the claims. Specifically, the present invention refers to a method of producing shaped articles from a UV-curable silicone rubber composition by irradiating said UV-curable silicone rubber composition with UV-light, characterized by the steps of (i) filling a UV-curable silicone rubber composition into a thermoformed UV-transparent mould which is made from a thermoplastic UV-transparent polymer, which preferably is also a UV stable polymer, and (ii) curing said UV-curable silicone rubber composition within said thermoformed UV-transparent mould by irradiation with UV-light.

Said shaped articles preferably are electrical insulators for indoor and outdoor use, preferably high voltage electrical insulators. For providing an electrical device, for example a hollow core, with the electrical insulation composition, said electrical device is placed and fixed in the thermoformed UV-transparent mould, so that there remains a defined free space between the outer surface of the electrical device and the inner mould walls. The UV-curable silicone rubber composition is then filled into the thermoformed UV-transparent mould so that the free space between the outer surface of the electrical device and the inner mould walls is filled with the UV-curable silicone rubber composition, which subsequently is cured by irradiation with UV-light.

The present invention refers to a thermoformed UV-transparent mould which is entirely made from a thermoplastic UV-transparent polymer and preferably entirely made from a thermoplastic UV-transparent and UV-stable polymer.

The present disclosure further refers to shaped articles, preferably in the form of an electrical insulator for indoor and outdoor use, preferably as a high voltage electrical insulator, made from a UV-curable silicone rubber composition by irradiating said UV-curable silicone rubber composition with UV-light, characterized in that said UV-curable silicone rubber composition has been filled into a thermoformed UV-transparent mould substantially made from a thermoplastic UV-transparent polymer, and that curing of said UV-curable silicone rubber composition within the thermoformed UV-transparent mould was performed by irradiation with UV-light.

The present disclosure further refers to electrical articles comprising an electrical insulation made from a UV-curable silicone rubber composition by irradiating said UV-curable silicone rubber composition with UV-light, said electrical insulator having been produced in a thermoformed UV-transparent mould made from a thermoplastic UV-transparent polymer, as defined herein according to the present invention.

There are many thermoplastic polymers that are UV-transparent and UV-stable. Such commercially available polymers are known in the art and can be used for the production of moulds within the scope of the present invention. Thermoplastic polymers that are UV-transparent and UV-stable, resp. are UV-transparent engineering plastics, are for example polymethylmethacrylate (PMMA); polyvinylchloride (PVC); cyclo-olefine-polymers (COP) as commercially available under the trade names ZEONE®, or ZEONOR®; polymethylacryl-methylimide-polymers (PMMI); polycarbonate (PC); polyethylene-terephthalate (PET); styrene-acrylonitrile polymers (SAN); polysulfone polymers (PSU); polymethacrylimide polymers (PMI); polypropylene (PP); polystyrene (PS). Preferred are polymethylmethacrylate (PMMA); polyvinylchloride (PVC); cyclo-olefine-polymers (COP); polymethylacryl-methylimide-polymers (PMMI); polycarbonate (PC); and polyethylene-terephthalate (PET). Most preferred are polymethylmethacrylate (PMMA) and polyvinylchloride (PVC).

A UV-transparent thermoplastic polymer within the scope of the present invention is a polymer with a UV-transparency of at least 30%, preferably of at least 60%, preferably of at least 80%, and preferably of at least 90%.For example with 60% UV-transparency in a wavelength range of the UV spectrum of the material of about 360 nm to 380 nm. If other transparencies are selected the wavelength need to be adjusted accordingly.

In this sense the wall thickness of the mould, i.e.the UV transparent mould wall, can vary between about 1 mm and 50 mm, giving the possibility to manufacture either flexible or rigid transparent moulds.

In an embodiment the wall thickness of the mould is within the range of about 1.0 mm to about 50 mm, preferably higher than 1 mm, preferably within the range of about 2.0 mm to about 30 mm, preferably within the range of about 2.0 mm to about 15 mm, preferably within the range of about 2.0 mm to about 10 mm. A thickness that is within the indicated range is typically enough to provide a mould that is durable for multiple mould cycles and to carry heavier weights. The wall thickness has to be selected such that the sheet material can be heated up for conducting the thermoforming process in order to create the negative or positive form of the article to be shaped.

The moulds can be produced for example from sheets with thermoplastic methods as single thick wall parts which are then put together to form a closed tool. Where required, the molds are assembled of several mould parts that are welded together. Such molds may contain more than one cavity that can be closed using e.g. snap lock solutions, to form a closed tool. For example vacuum forming techniques can be used for forming conical shaped mould tool parts, such as conical outer mould parts for forming stress relief cones.

Test results have shown that commercially available UV-curable silicone rubber compositions when cured with UV-light in moulds made from UV-transparent and UV-stable thermoplastic polymers, resp. in moulds made from UV-transparent engineering plastics, as defined herein above, cure within a curing time of about 10 seconds to 60 seconds, and generally within a curing time of about 30 seconds.

The moulds can be produced for example as single thick wall parts which are then put together to form a closed tool. It is also possible to manufacture molds that contain more than one cavity, that can be closed using e.g. snap lock solutions, to form a closed tool.

For example vacuum forming techniques can be used for forming conical shaped mould tool parts, such as conical outer mould parts for forming stress relief cones. For such moulds for example PVC sheets of 1 mm thickness as blanks can be used.

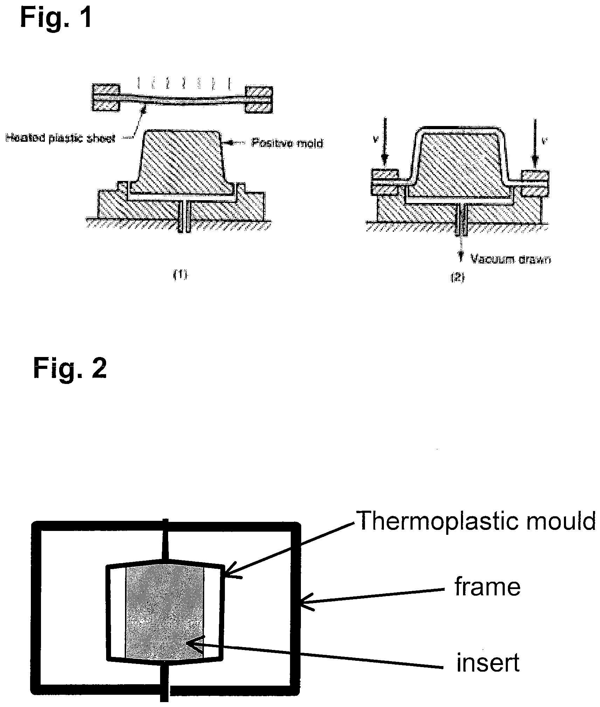

Figure 1 illustrates the mould manufacture with UV-transparent plates that are heated up and formed on a positive mould.The two mould halves are then mounted together for example using a frame. Figure 2 illustrates a possible moulding concept.

The core of the mould, made from a UV-transparent engineering plastics, for example made from a PMMA tube, may be designed to hold an aluminium foil in order to scatter the UV-light to shadowed parts of the UV-curable SR-composition within the mould.

Mixing and metering equipments for mixing the components of the UV-curable liquid silicone rubber composition (UV-LSR) and for filling the moulds with the UV-LSR is known and commercially available.

As a light source for irradiation with UV-light any light source can be used. Such UV-light sources are commercially available. The wavelength generally is within the range of 180 nm to 700 nm, preferably within the range of 190 nm to 500 nm, preferably within the range of 300 nm to 400 nm, and preferably at about 360 nm to 400 nm.

UV-light sources to produce UV-light, which can be used within the scope of the present invention, are for example xenon lamps, mercury lamps and mercury lamps doped with iron or gallium, black-light lamps, excimer lasers and UV-LED lamps.

The UV-light source may be provided for example by an arcing UV-lamp, or by a microwave powered UV-lamp or by an LED UV-lamp. The major advantage of LED UV-lamp over the two other types of UV-lamps is the fact that an LED UV-lamp irradiates within a specific wavelength area. In this way, a significantly lower amount of heat is generated during UV-irradiation. Therefore, LED UV-lamps are preferred to work with transparent organic moulds.

Preferred is a light source based on the UV-LED technique, particularly in the form of the Semiconductor Light Matrix (SLM), as closed packed LED's. Such a light source is simple to install, is safe to use and energy efficient, and has a long service life with practically no maintenance costs. UV-LED sources further have a high UV-light intensity and give good curing results, for example when comparing cure depth versus distance of the UV-light source and irradiation time, for UV-curing UV-LSR compositions. UV-LED sources generally give better results than conventional halogen UV-sources, as the UV-intensity of UV-LED sources is generally higher than the UV-intensity of conventional halogen UV-sources. An example for a commercially available UV-lamp is the Phoseon water cooled UV-LED RX StarFire Max, with wavelength of 365 nm and 395 nm with a stated output of 2 W/cm² or 4 W/cm².

The UV-curable silicone rubber composition may contain sensitizers and/or photoinitiators such as compounds derived from antharacene, xanthonone, anthrachinone. Such compounds and their use as sensitizers and/or photoinitiators are known in the art and are commercially available.

The irradiation source preferably has power consumption within the range of 2 kW to 20 kW and may be arranged around the mould at a distance of 1 cm to 100 cm, preferably at a distance of 1 cm to 10 cm, whereby the mould may be rotated so as to uniformly distribute the irration energy.

The UV-light-irradiation intensity applied for UV-curing LSR is preferably within the range of 1 W/cm² to 4 W/cm², preferably within the range of 2 W/cm² to 4 W/cm², at a wave length as defined herein before.

A common UV-source used today for UV-curing different curable materials are mercury lamps and mercury lamps doped with iron or gallium. The UV-light emitted from these types of light sources covers a wide range of wave lengths. However, the shortest wave lengths cause formation of non desired ozone and the long wave light, which is partly within the infra red range, generates heat. Halogen lamps possess short service lifes in the order of 1000 hours compared to tens of thousands hours for UV-LED lamps. Therefore, UV-LED lamps are preferred in comparison to mercury lamps.

UV-LED lamps may be suitably arranged for obtaining optimum results. LED-lamps of different lengths may be used to allow for optimised UV-curing by individually adjusting the number of UV-LED units and their intensity levels. A possible production set up for rotational symmetric products is to place the products to be UV-cured in an upright position, e.g. on a slowly rotating disc. Very short curing times may be obtained by using vertically positioned and adjustable UV-LED heads, e.g. three such heads uniformly spaced at 120 degrees angle, e.g. of the type Phoseon RX StarFire Max, with 365 nm wavelength, and optionally additional UV-spot lamps, e.g. of the type Phoseon RX FireFlex units, above and below the mould to allow for simultaneously irradiation outer and internal parts. According to the present invention cure times in the order of 10 seconds are obtainable for thin walled products such as indoor cable terminations (SOT).

In this sense, cable terminations, for indoor or outdoor use, or stress cones are manufacturable, as shaped articles in the sense of the present disclosure.

After curing, the cured product can be taken out of the mould with conventional methods.

The UV-cured silicone compositions, cured according to the present invention, are preferably used as electrical insulations both for indoor and outdoor applications, hollow core insulators, cable accessories such as cable terminations, medium voltage (MV) and high voltage (HV) surge arresters, medium voltage (MV) vacuum interrupters or bushings.

UV curable silicone resin compositions are known and generally comprise at least an organopolysiloxane with at least one alkenyl group per molecule and at least one organohydrogenpolysiloxane. In order to activate the cross-linking reaction, i.e. the addition reaction between the alkenyl group (-CH=CH₂) and the =SiH-groups, the composition comprises a UV sensitive cross-linking catalyst.

Preferred UV-curable silicone resin compositions are liquid to pasty and preferably contain (a) at least an organopolysiloxane with an average of at least two alkenyl groups per molecule, said polysiloxane being linear, branched or cyclic or a mixture of such polysiloxanes; (b) at least one organohydrogenpolysiloxane, preferably with an average of at least two =SiH-groups per molecule, said polysiloxane being linear, branched or cyclic or a mixture of such polysiloxanes, and (c) a catalytic amount of at least one UV-sensitive cross-linking catalyst.

The molar ratio of the of the =SiH-groups to the alkenyl groups present in the composition is within the range of about 1,5 : 4,5; preferably of 1,8 : 2,5; and preferably is at least 2.0.

The UV curable silicone resin compositions according to the present invention may contain further additives such as fillers, stabilizers, silicon oils, as known in the art.

Organopolysiloxane with an average of at least two alkenyl groups per molecule [component (a) as mentioned above], are known per se. Preferred such organopolysiloxanes correspond to compounds of formula (I) resp. to a mixture of compounds of formula (II): 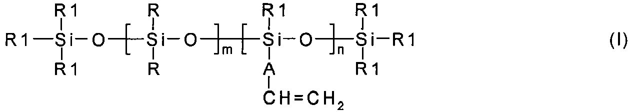 wherein
- R: independent of each other is (C₁-C₈)-alkyl or phenyl, preferably (C₁-C₄)-alkyl, preferably methyl;
- R₁: independent of each other has one of the meanings of R or is a residue of formula -A-CH=CH₂;
- A: is a residue -(CₛH₂ₛ)ₚ- , preferably -[(CH₂)ₛ]ₚ- , wherein
- s: is 1 to 6, preferably 1;
- p: is zero or one;
- m: is zero to 5000, preferably an average value of 20 to 5000, preferably 50 to 1500;
- n: is zero to 100, preferably an average number of 2 to 100, preferably 2 to 20;
wherein the compound of formula (I), resp. the mixture of compounds of formula (I), has an average of at least two alkenyl groups of the formula -A-CH=CH₂ per molecule, and the groups of the formulae -[Si(R)(R)O]- and -[Si(R₁)(A-CH=CH₂)O]- are arranged in an arbitrary sequence.

Compounds of formula (I) generally are a mixture of compounds of formula (I) with different molecular weights. This is known to the expert in the art. The alkenyl group [-A-CH=CH₂] can be for example vinyl, allyl, 3-butenyl, 4-pentenyl, and preferably vinyl (i.e. p = zero). The terminal silyloxy groups preferably independent of each other stand for dimethylvinylsiloxy, wherein n preferably is zero.

The organopolysiloxanes of component (a) and preferably of formula (I) preferably have a viscosity within the range of 0.5 to 30'000 Pas, preferably within the range of 1 to 500 Pas, and preferably within the range of 1 to 100 Pas, measured according to DIN 53 019 at 20°C. The sum of [m + n] is preferably in the average range of 20 to 5000, preferably within the average range of 50 to 1500.

Organopolysiloxane with an average of at least two =SiH-groups per molecule, [component (b) as mentioned above], are known *per* se. Preferably component (b) comprises at least a linear, branched or cyclic organohydrogenpolysiloxane with an average of at least two =SiH-groups per molecule and preferably corresponds to compound of formula (II) or a mixture of compounds of formula (II) : 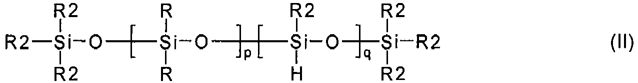 wherein
- R: independent of each other is (C₁-C₈)-alkyl or phenyl, preferably (C₁-C₄)-alkyl, preferably methyl;
- R₂: independent of each other has one of the meanings of R or is hydrogen;
- p: is zero to 5000, preferably an average value of 20 to 5000, preferably 50 to 1500;
- n: is zero to 60, preferably an average number of 2 to 60, preferably 2 to 30;
wherein the compound of formula (II), resp. the mixture of compounds of formula (II), has an average of at least two =SiH-groups per molecule, and the groups of the formulae -[Si(R)(R)O]- and -[SiH(R₂)O]- are arranged in an arbitrary sequence.

Compounds of formula (II) generally are a mixture of compounds of formula (II) with different molecular weights. This is known to the expert in the art. The terminal silyloxy groups preferably independent of each other stand for dimethylhydrogen-siloxy, wherein q preferably is zero. The organopolysiloxanes of component (b) and of formula (II) preferably have a viscosity within the range of 0.1 to 5 Pas.

Component (b) may represent or comprise a cyclic organohydrogenpolysiloxane. In this case, two terminal substituents R₂ of two different terminals of the molecule form together an oxygen atom. The molecule of compound (II) in this case is composed of -[Si(R)(R)O]-units and of -[SiH(R₂)O]-units or only of -[SiH(R₂)O]- units, which form the ring structure. Such a cyclic molecule is composed preferably 4 to 8 of such units, preferably of an average of 4 of such units corresponding to the formula [-SiH(R₂)O-]₄.

The UV-curable silicone resin composition contains the UV sensitive hydrosilylation cross-linking catalyst in amounts within the range of 1 ppm to 5000 ppm, preferably within the range of 5 ppm to 1000 ppm, preferably 50 ppm to 200 ppm, and preferably about 100 ppm, calculated to the weight of metal contained in the catalyst and the sum of the weight of component (a) and component (b).

The handling, treatment, mixing and application of the components of the UV curable silicone resin composition is known to the expert in the art and needs nor further explanation.

Numerous UV-sensitive cross-linking catalysts are known in the art. Such UV-sensitive catalysts for effecting the addition of silicone hydride compounds to vinyl-substituted silanes and siloxanes generally referred to as hydrosilylation of two-part silicone resin compositions, are preferably palladium and/or platinum catalysts.

UV sensitive cross-linking catalysts can be made from a metal, or more than one metal, of group VIII of the periodic system of elements, preferably from ruthenium (Ru), osmium (Os), cobalt (Co), rhodium (Rh), iridium (Ir), nickel (Ni), palladium (Pd) and platinum (Pt), and represent heterogeneous forms as well as chemical compounds and complexes therefrom. Preferred are such forms made from rhodium, palladium and platinum, especially from palladium and platinum, in heterogeneous forms or as chemical compounds or complexes thereof.

Preferred UV-sensitive cross-linking catalysts are heterogeneous forms of these metals, by using the metal per *se* or compositions wherein the metal is deposited on a carrier material, such as deposited on charcoal, silica or alumina, preferably on alumina and especially on gamma-alumina. As starting materials, for example H₂PtCl₆, PdCl₆ or RhCl₆ are used and reduced to the metal, so that corresponding metal particles are deposited on the carrier material, with an average particle size which is preferably in nano-size range. Preferred are such heterogeneous platinum catalysts. Such catalysts are known in the art. Preferred UV-sensitive cross-linking catalysts further are chemical compounds and complexes of metals of group VIII of the periodic system of elements, as mentioned above, used as homogeneous catalysts. Preferred are platinum(0) and platinum(II) compounds, e.g. in the form of complexes. Preferred platinum containing catalysts are chloroplatinic acid (H₂PtCl₆) in anhydrous form or as hexahydrate, or platinum Pt(0) or Pt(II) complexes which have ligands selected from halides, preferably chlorine; (C₁-C₈)alkyl radicals; (C₁-C₈)aliphatic unsaturated radicals, e.g. 1,5-cyclooctadiene (C₈H₁₂), such (C₈H₁₂)₂PtCl₂, or styrene, yielding (styrene)₂PtCl₂.

Preferred are also platinum complexes which are obtained by reacting chloroplatinic acid and complexes thereof with an aliphatic unsaturated organosilane or an aliphatic unsaturated organopolysiloxane compound, such as a vinylsilane or vinyl groups containing organopolysiloxane. Such hydrosilylation catalysts are described for example in US 4,681,963, US 4, 705, 765, or US 5,106, 939.

Examples for compounds to be used as UV-sensitive hydrosilylation cross-linking catalysts on the basis of palladium (Pd) are Pd(0)-compounds such tetrakis(triphenylphosphino)palladium and the corresponding complexes with the ligands tri-(2-tolyl)-phosphine, tris-(2-furyl)phosphine, tris(tert.-butyl)phosphine, or the two-valent ligands dppm [1,1-bis(diphenylphosphino-methan)] or dppe [1,2-bis-(diphenylphosphino)ethane]. Pd(II)-compounds, such as PdCl₂, Pd(dppe)Cl₂, Pd(OAc)₂, Pd(dppe)(OAc)₂, π-allyl-Pd-complex, can also be used. Such analogous complexes made from metals of group VIII of the periodic system of elements, as mentioned above, preferably are made from ruthenium (Ru), osmium (Os), cobalt (Co), rhodium (Rh), iridium (Ir), nickel (Ni), palladium (Pd) and platinum (Pt), preferably made from palladium and platinum, and as analogous compounds made from platinum. Such compounds are known in the art and can be used within the scope of the present invention.

The UV-sensitive hydrosilylation cross-linking catalyst as defined herein above is added to the UV-curable silicone composition, so that said UV-curable silicone composition contains said UV-sensitive hydrosilylation cross-linking catalyst in amounts within the range of 0.1 parts per hundred (phr) to 3 phr, preferably within the range of 0.5 phr to 2.5 phr, preferably 0.5 phr to 1.5 phr, calculated to the weight of metal contained in the catalyst and the weight of the UV-curable silicone composition. These weight ratios, however, are not critical, and higher amounts may be added if indicated.

The following examples illustrate the invention.

### Example 1

Stress relief cones were produced using a PMMA tube with a defined outer diameter of 50 mm to form the mould core on which the insert field grading Alfex tub was positioned. The PMMA tube was put into a multi-part mould comprising of two thermoformed mould-halves from PMMA sheets of about 4 mm that are fastened together. The PMMA tube and the thermoformed mould were kept in place with a metal frame. Inlets were mounted onto the PMMA tube at the narrow extremity of the cone. UV curable silicone (e.g. UV Electro 235-2 from Momentive) was injected into the transparent mould starting from the narrow part of the cone. Once the mould was filled a thin layer of silicone flew between the PMMA tube and the field grading Alfex tube, ensuring a continuity in the geometry (no electrical triple points). UV light was then applied by rotating the stress relief cone in front of a UV LED lamp RX Starfire. The whole stress cone was cured within 5 to 10 minutes. The metal frame was removed and air was inserted between the mould and the cured part to ensure easy demoulding. The same procedure was used to remove the PMMA tube from the moulded part.

### Example 2

Two mould halves were manufactured by thermoforming a PMMA plate with a wall thickness of 8 mm. The inner geometry of the two mould halves was corresponding to the external shape of a silicone embedded vacuum interrupter. On one of the mould halves, an inlet was mounted for the injection of the liquid silicone ruber. A vacuum interrupter was placed between the two thermoformed mould halves and the mould was closed with bolts. The UV curable silicone (e.g. UV Electro 235-2 from Momentive) was then injected into the PMMA mould via the inlet. Once the mould was filled, it was rotated in front of a UV LED lamp RX StarFire at a speed of 6 rpm. The distance between the mould and the lamp was ca. 1 cm. After an illumination time of 2 minutes, the silicone was cured and the part could be demoulded.

### Example 3

Two mould halves were manufactured by thermoforming a PMMA plate with a wall thickness of 3 mm. The inner geometry of the two mould halves was corresponding to the external shape of a silicone embedded vacuum interrupter. On one of the mould halves, an inlet was mounted for the injection of the liquid silicone ruber. A vacuum interrupter was placed between the two thermoformed mould halves and the mould was closed with bolts. The UV curable silicone (e.g. UV Electro 235-2 from Momentive) was then injected into the PMMA mould via the inlet. Once the mould was filled, it was rotated in front of a UV LED lamp RX StarFire at a speed of 6 rpm. The distance between the mould and the lamp was ca. 1 cm. After an illumination time of 2 minutes, the silicone was cured and the part could be demoulded.

All elements, parts and steps described herein are preferably included. It is to be understood that any of these elements, parts and steps may be replaced by other elements, parts and steps or deleted all together as will be obvious to those skilled in the art.

Broadly this writing has disclosed at least the following. Method of producing a shaped article from a UV-curable silicone rubber composition by irradiating said UV-curable silicone rubber composition with UV-light, comprising the steps of (i) filling a UV-curable silicone rubber composition into a thermoformed UV-transparent mould which is made from a thermoplastic UV-transparent polymer, and (ii) curing said UV-curable silicone rubber composition within said thermoformed UV-transparent mould by irradiation with UV-light; said shaped articles being in the form of an electrical insulator for indoor and outdoor use; and electrical articles comprising an electrical insulation made by the method according to the present invention.

## Claims

1. Method of producing a shaped article from a UV-curable silicone rubber composition by irradiating said UV-curable silicone rubber composition with UV-light, said method comprising the steps of (i) filling a UV-curable silicone rubber composition into a thermoformed UV-transparent mould which is made from a thermoplastic UV-transparent polymer, and (ii) curing said UV-curable silicone rubber composition within said thermoformed UV-transparent mould by irradiation with UV-light, **characterized in that** before step i), a) a step of providing a planar sheet material having a constant thickness is carried out, followed by b) a step of bringing the sheet material in a shape by thermoforming such that its interior contour is the negative or the positive of the form of the article to be shaped with the mould,
wherein said thermoformed UV-transparent mould is entirely made from a thermoplastic UV-transparent polymer selected from the group consisting of polymethylmethacrylate; polyvinylchloride; cyclo-olefine-polymers; polymethylacryl-methylimide-polymers; polycarbonate; polyethylene-terephthalate; styrene-acrylonitrile polymers; polysulfone polymers; polymethacrylimide polymers; polypropylene; and polystyrene.

2. Method according to claim 1, **characterized in that** said shaped articles are electrical insulators for indoor and outdoor use, preferably high voltage electrical insulators.

3. Method according to claim 1, **characterized in that** said UV-transparent polymer is selected from the group consisting of polymethylmethacrylate; polyvinylchloride; cyclo-olefine-polymers; polymethylacryl-methylimide-polymers; polycarbonate; and polyethylene-terephthalate; preferably from polymethylmethacrylate and polyvinylchloride.

4. Method according to any one of the claims 1-3, **characterized in that** said UV-transparent polymer has a UV-transparency of at least 30%, preferably of at least 60%, preferably of at least 80%, and preferably of at least 90%.

5. Method according to any one of the claims 1-4, **characterized in that** the wall thickness of the mould is between 1 mm and 50 mm.

6. Method according to claim 5, **characterized in that** the wall thickness of the mould is within the range of 2.0 mm to 60 mm, preferably within the range of 3.0 mm to 50 mm, preferably within the range of 3.0 mm to 40 mm, preferably within the range of 3.0 mm to 30 mm.

7. Method according to any one of the claims 1-5, **characterized in that** the light source for irradiation with UV-light has a wavelength within the range of 180 nm to 700 nm, preferably within the range of 190 nm to 500 nm, preferably within the range of 300 nm to 400 nm, preferably at 360 nm to 400 nm.

8. Method according to any one of the claims 1-7, **characterized in that** the UV-light-irradiation intensity applied for UV-curing is within the range of 1 W/cm² to 4 W/cm², preferably within the range of 2 W/cm² to 4 W/cm².

9. Method according to any one of the claims 1-8, **characterized in that** the UV-curable silicone resin composition is liquid to pasty and contain (a) at least an organopolysiloxane with an average of at least two alkenyl groups per molecule, said polysiloxane being linear, branched or cyclic or a mixture of such polysiloxanes; (b) at least one organohydrogenpolysiloxane, with an average of at least two ≡SiH-groups per molecule, said polysiloxane being linear, branched or cyclic or a mixture of such polysiloxanes, and (c) a catalytic amount of at least one UV-sensitive cross-linking catalyst,
wherein the molar ratio of the of the ≡SiH-groups to the alkenyl groups present in the composition is preferably within the range of 1,5 : 4,5; preferably of 1,8 : 2,5; and preferably is at least 2.0, and wherein preferably
the UV sensitive cross-linking catalysts is made from a metal of group VIII of the periodic system of elements, preferably from ruthenium (Ru), osmium (Os), cobalt (Co), rhodium (Rh), iridium (Ir), nickel (Ni), palladium (Pd) and platinum (Pt), and represent heterogeneous forms as well as chemical compounds and complexes thereof.

10. Method according to any one of the claims 9, **characterized in that** the UV-curable silicone resin composition contains the UV sensitive hydrosilylation cross-linking catalyst in amounts within the range of 1 ppm to 5000 ppm, preferably within the range of 5 ppm to 1000 ppm, preferably 50 ppm to 200 ppm, and preferably 100 ppm, calculated to the weight of metal contained in the catalyst and the sum of the weight of component (a) and component (b).

11. Use of a thermoformed UV-transparent mould made from a thermoplastic UV-transparent and UV-stable polymer for carrying out a method according to any one of the claims 1-10, wherein the mould is made of a sheet material which has been brought in a shape by thermoforming such that its interior contour is the negative or the positive of the form of the article to be shaped with the mould.

## Patentansprüche

1. Verfahren zur Herstellung eines gestalteten Gegenstands aus einer UV-härtbaren Silikonkautschukzusammensetzung durch Bestrahlen der UV-härtbaren Silikonkautschukzusammensetzung mit UV-Licht, wobei das Verfahren die Schritte umfasst:
(i) Füllen einer UV-härtbaren Silikonkautschukzusammensetzung in ein thermogeformtes UVtransparentes Formwerkzeug, das aus einem thermoplastischen UV-transparenten Polymer gefertigt ist, und
(ii) Härten der UV-härtbaren Silikonkautschukzusammensetzung in dem thermogeformten UV-transparenten Formwerkzeug durch Bestrahlen mit UV-Licht,
**dadurch gekennzeichnet, dass** vor Schritt i) a) ein Schritt des Bereitstellens eines planaren Lagenmaterials mit einer konstanten Dicke durchgeführt wird, gefolgt von b) einem Schritt des Bringens des Lagenmaterials in eine Gestalt mittels Thermoformen, so dass dessen Innenkontur das Negativ oder das Positiv der Form des mittels des Formwerkzeugs zu gestaltenden Gegenstands ist,
wobei das thermogeformte UV-transparente Formwerkzeug gänzlich aus einem thermoplastischen UV-transparenten Polymer ausgewählt aus der Gruppe bestehend aus Polymethylmethacrylat; Polyvinylchlorid; Cycloolefinpolymeren; Polymethylacryl-Methylimid-Polymeren; Polycarbonat; Polyethylenterephthalat; Styrol-Acrylonitril-Polymeren; Polysulfonpolymeren; Polymethacrylimidpolymeren; Polypropylen und Polystyrol gefertigt ist.

2. Verfahren nach Anspruch 1, **dadurch gekennzeichnet, dass** die gestalteten Gegenstände elektrische Isolatoren zum Gebrauch in Innenräumen und draußen sind, vorzugsweise elektrische Hochspannungsisolatoren.

3. Verfahren nach Anspruch 1, **dadurch gekennzeichnet, dass** das UV-transparente Polymer ausgewählt ist aus der Gruppe bestehend aus Polymethylmethacrylat; Polyvinylchlorid; Cycloolefinpolymeren; Polymethylacryl-Methylimid-Polymeren; Polycarbonat und Polyethylenterephthalat; vorzugsweise aus Polymethylmethacrylat und Polyvinylchlorid.

4. Verfahren nach einem der Ansprüche 1 bis 3, **dadurch gekennzeichnet, dass** das UV-transparente Polymer eine UV-Transparenz von mindestens 30 %, vorzugsweise mindestens 60 %, vorzugsweise mindestens 80 % und vorzugsweise mindestens 90 % aufweist.

5. Verfahren nach einem der Ansprüche 1 bis 4, **dadurch gekennzeichnet, dass** die Wanddicke des Formwerkzeugs zwischen 1 mm und 50 mm liegt.

6. Verfahren nach Anspruch 5, **dadurch gekennzeichnet, dass** die Wanddicke des Formwerkzeugs im Bereich von 2,0 mm bis 60 mm, vorzugsweise im Bereich von 3,0 mm bis 50 mm, vorzugsweise im Bereich von 3,0 mm bis 40 mm, vorzugsweise im Bereich von 3,0 mm bis 30 mm liegt.

7. Verfahren nach einem der Ansprüche 1 bis 5, **dadurch gekennzeichnet, dass** die Lichtquelle zum Bestrahlen mit UV-Licht eine Wellenlänge im Bereich von 180 nm bis 700 nm, vorzugsweise im Bereich von 190 nm bis 500 nm, vorzugsweise im Bereich von 300 nm bis 400 nm, vorzugsweise 360 nm bis 400 nm hat.

8. Verfahren nach einem der Ansprüche 1 bis 7, **dadurch gekennzeichnet, dass** die zum UV-Härten verwendete Bestrahlungsintensität des UV-Lichts im Bereich von 1 W/cm² bis 4 W/cm², vorzugsweise im Bereich von 2 W/cm² bis 4 W/cm² liegt.

9. Verfahren nach einem der Ansprüche 1 bis 8, **dadurch gekennzeichnet, dass** die UV-härtbare Silikonharzzusammensetzung flüssig bis pastös ist und (a) mindestens ein Organopolysiloxan mit durchschnittlich mindestens zwei Alkenylgruppen pro Molekül, wobei das Polysiloxan linear, verzweigt oder cyclisch ist, oder eine Mischung solcher Polysiloxane; (b) mindestens ein Organohydrogenpolysiloxan mit durchschnittlich mindestens zwei =SiH-Gruppen pro Molekül, wobei das Polysiloxan linear, verzweigt oder cyclisch ist, oder eine Mischung solcher Polysiloxane, und (c) eine katalytische Menge von mindestens einem UV-sensitiven Vernetzungskatalysator enthält,
wobei das Molverhältnis der =SiH-Gruppen zu den Alkenylgruppen, die in der Zusammensetzung vorhanden sind, vorzugsweise im Bereich von 1,5:4,5; vorzugsweise 1,8:2,5 liegt und vorzugsweise mindestens 2,0 ist, und wobei
die UV-sensitiven Vernetzungskatalysatoren vorzugsweise aus einem Metall der Gruppe VIII des Periodensystems der Elemente gefertigt sind, vorzugsweise aus Ruthenium (Ru), Osmium (Os), Kobalt (Co), Rhodium (Rh), Iridium (Ir), Nickel (Ni), Palladium (Pd) und Platin (Pt), und heterogene Formen sowie chemische Verbindungen und Komplexe davon repräsentieren.

10. Verfahren nach Anspruch 9, **dadurch gekennzeichnet, dass** die UV-härtbare Silikonharzzusammensetzung den UV-sensitiven Hydrosilylierungsvernetzungskatalysator in Mengen im Bereich von 1 ppm bis 5000 ppm, vorzugsweise im Bereich von 5 ppm bis 1000 ppm, vorzugsweise 50 ppm bis 200 ppm und vorzugsweise 100 ppm enthält, berechnet bezogen auf das Gewicht des in dem Katalysator enthaltenen Metalls und der Summe der Gewichte von Komponente (a) und Komponente (b).

11. Verwendung eines thermogeformten UV-transparenten Formwerkzeugs, das aus einem thermoplastischen UV-transparenten und UV-stabilen Polymer gefertigt ist, zur Durchführung eines Verfahrens gemäß einem der Ansprüche 1 bis 10, wobei das Formwerkzeug aus einem Lagenmaterial gefertigt ist, das durch Thermoformen in eine Gestalt gebracht worden ist, so dass dessen Innenkontur das Negativ oder das Positiv der Form des durch das Formwerkzeug zu gestaltenden Gegenstands ist.

## Revendications

1. Procédé de production d'un article façonné à partir d'une composition de caoutchouc de silicone durcissable aux UV par irradiation de ladite composition de caoutchouc de silicone durcissable aux UV avec un rayonnement UV, ledit procédé comprenant les étapes de (i) remplissage avec une composition de caoutchouc de silicone durcissable aux UV d'un moule thermoformé transparent aux UV qui est fabriqué à partir d'un polymère thermoplastique transparent aux UV, et (ii) durcissement de ladite composition de caoutchouc de silicone durcissable aux UV à l'intérieur dudit moule thermoformé transparent aux UV par irradiation avec un rayonnement UV,
**caractérisé en ce que**, avant l'étape (i), a) une étape d'obtention d'un matériau en feuille plane ayant une épaisseur constante est réalisée, suivie b) d'une étape de mise en forme du matériau en feuille par thermoformage de telle sorte que son contour intérieur soit le négatif ou le positif de la forme de l'article à façonner avec le moule,
dans lequel ledit moule thermoformé transparent aux UV est entièrement fabriqué à partir d'un polymère thermoplastique transparent aux UV choisi dans le groupe constitué par le polyméthacrylate de méthyle, le polychlorure de vinyle, les polymères cyclooléfiniques, les polymères de polyméthylacryl-méthylimide, le polycarbonate, le téréphtalate de polyéthylène, les polymères styrène-acrylonitrile, les polymères de polysulfone, les polymères de polyméthacrylimide, le polypropylène et le polystyrène.

2. Procédé selon la revendication 1, **caractérisé en ce que** lesdits articles façonnés sont des isolateurs électriques pour une utilisation intérieure et extérieure, de préférence des isolateurs électriques haute tension.

3. Procédé selon la revendication 1, **caractérisé en ce que** ledit polymère transparent aux UV est choisi dans le groupe constitué par le polyméthacrylate de méthyle, le polychlorure de vinyle, les polymères cyclooléfiniques, les polymères de polyméthylacryl-méthylimide, le polycarbonate et le téréphtalate de polyéthylène, de préférence parmi le polyméthacrylate de méthyle et le polychlorure de vinyle.

4. Procédé selon l'une quelconque des revendications 1 à 3, **caractérisé en ce que** ledit polymère transparent aux UV a une transparence aux UV d'au moins 30 %, de préférence d'au moins 60 %, de préférence d'au moins 80 %, et de préférence d'au moins 90 %.

5. Procédé selon l'une quelconque des revendications 1 à 4, **caractérisé en ce que** l'épaisseur de paroi du moule se situe entre 1 mm et 50 mm.

6. Procédé selon la revendication 5, **caractérisé en ce que** l'épaisseur de paroi du moule se situe dans la gamme de 2,0 mm à 60 mm, de préférence dans la gamme de 3,0 mm à 50 mm, de préférence dans la gamme de 3,0 mm à 40 mm, de préférence dans la gamme de 3,0 mm à 30 mm.

7. Procédé selon l'une quelconque des revendications 1 à 5, **caractérisé en ce que** la source de lumière pour l'irradiation avec un rayonnement UV a une longueur d'onde dans la gamme de 180 nm à 700 nm, de préférence dans la gamme de 190 nm à 500 nm, de préférence dans la gamme de 300 nm à 400 nm, de préférence à 360 nm à 400 nm.

8. Procédé selon l'une quelconque des revendications 1 à 7, **caractérisé en ce que** l'intensité d'irradiation avec un rayonnement UV appliquée pour le durcissement aux UV se situe dans la gamme de 1 W/cm² à 4 W/cm², de préférence dans la gamme de 2 W/cm² à 4 W/cm².

9. Procédé selon l'une quelconque des revendications 1 à 8, **caractérisé en ce que** la composition de résine de silicone durcissable aux UV est liquide à pâteuse et contient (a) au moins un organopolysiloxane avec une moyenne d'au moins deux groupes alcényle par molécule, ledit polysiloxane étant linéaire, ramifié ou cyclique, ou un mélange de tels polysiloxanes, (b) au moins un organohydrogénopolysiloxane avec une moyenne d'au moins deux groupes =SiH par molécule, ledit polysiloxane étant linéaire, ramifié ou cyclique, ou un mélange de tels polysiloxanes, et (c) une quantité catalytique d'au moins un catalyseur de réticulation sensible aux UV,
dans lequel le rapport molaire entre les groupes =SiH et les groupes alcényle présents dans la composition se situe de préférence dans la gamme de 1,5-4,5, de préférence de 1,8-2,5, et de préférence est d'au moins 2,0, et dans lequel, de préférence,
le catalyseur de réticulation sensible aux UV est élaboré à partir d'un métal du groupe VIII du tableau périodique des éléments, de préférence à partir de ruthénium (Ru), osmium (Os), cobalt (Co), rhodium (Rh), iridium (Ir), nickel (Ni), palladium (Pd) et platine (Pt), et représente des formes hétérogènes ainsi que des composés chimiques et des complexes de ceux-ci.

10. Procédé selon du revendication 9, **caractérisé en ce que** la composition de résine de silicone durcissable aux UV contient le catalyseur de réticulation par hydrosilylation sensible aux UV dans des quantités dans la gamme de 1 ppm à 5000 ppm, de préférence dans la gamme de 5 ppm à 1000 ppm, de préférence 50 ppm à 200 ppm, et de préférence 100 ppm, calculées par rapport au poids de métal contenu dans le catalyseur et à la somme des poids du constituant (a) et du constituant (b).

11. Utilisation d'un moule thermoformé transparent aux UV fabriqué à partir d'un polymère thermoplastique transparent aux UV et stable aux UV pour la réalisation d'un procédé selon l'une quelconque des revendications 1 à 10, le moule étant constitué d'un matériau en feuille qui a été mis en forme par thermoformage de telle sorte que son contour intérieur est le négatif ou le positif de la forme de l'article à façonner avec le moule.
